# EUROPEAN PATENT SPECIFICATION

(11) **EP 3 998 919 B1**
(45) Date of publication and mention of the grant of the patent: **13.12.2023**
(21) Application number: 20740340.3
(22) Date of filing: 20.07.2020
(51) Int. Cl.: A47J 31/60, A47J 31/52, A47J 31/46

(54) **SANITIZATION UNIT, BEVERAGE PREPARATION MACHINE COMPRISING SUCH A SANITIZATION UNIT AND BEVERAGE PREPARATION METHOD IMPLEMENTING SUCH A BEVERAGE PREPARATION MACHINE**
DESINFEKTIONSEINHEIT, GETRÄNKEZUBEREITUNGSMASCHINE MIT SOLCH EINER DESINFEKTIONSEINHEIT UND GETRÄNKEZUBEREITUNGSVERFAHREN MIT IMPLEMENTIERUNG SOLCH EINER GETRÄNKEZUBEREITUNGSMASCHINE
UNITÉ D'ASSAINISSEMENT, MACHINE DE PRÉPARATION DE BOISSON COMPRENANT UNE TELLE UNITÉ D'ASSAINISSEMENT ET PROCÉDÉ DE PRÉPARATION DE BOISSON METTANT EN OEUVRE UNE TELLE MACHINE DE PRÉPARATION DE BOISSON

(30) Priority: 19.07.2019 EP 19187408
(43) Date of publication of application: 25.05.2022
(73) Proprietor: Société des Produits Nestlé S.A., 1800 Vevey (CH)
(72) Inventor: FLICK, Jean-Marc, 1405 POMY (CH)
(74) Representative: Pasquino, Fabio
(86) International application number: PCT/EP2020/070469
(87) International publication number: WO 2021/013803

(56) References cited:
- EP-A1- 2 567 712
- WO-A1-2008/126037
- WO-A2-2014/041539
- DE-U1-202009 001 015

## Description

### TECHNICAL FIELD

The present invention relates to a sanitization unit for sanitizing a liquid to be delivered to a product container or product compartment in order to prepare a beverage. Further, the present invention relates to a beverage preparation machine comprising such a sanitization unit. Besides, the present invention relates to a beverage preparation method implementing such a sanitization unit.

The product container or product compartment may enclose a nutritional composition or ingredients in a liquid, pasty or powdery form, such as an infant formula composition, milk-based ingredients or soya-based ingredients. With the present invention a ready-to-drink beverage may be prepared in a safe and hygienic manner. The present invention may be used to prepare a wide spectrum of beverages by using various product compartments.

### BACKGROUND

Some of the currently available sanitization units comprise an irradiation chamber and an irradiation device intended to sanitize a liquid dispensed to prepare a beverage. The irradiation chamber has a liquid inlet and a liquid outlet so as to let the liquid flow in and, after irradiation, out of the irradiation chamber. The document WO 2008/126037 A1 discloses a sanitization unit for sanitizing a liquid to be delivered to a beverage preparation unit.

However, the present applicant has observed that the known sanitization units present some problems and drawbacks, which might arise from their designs, possibly from the arrangement of the liquid inlet and the liquid outlet. In some instances, the liquid might not be sufficiently irradiated in case its flow pattern transiently follows a short path in the irradiation chamber and/or makes the residence duration in the irradiation chamber too short. In other instances, some liquid might remain trapped after a beverage preparation in the irradiation chamber or in another portion of the fluid circuit. The trapped liquid risks altering the temperature of the next amount of liquid to be dispensed. Also, the trapped liquid risks promoting the growth of a biofilm of microorganisms, in particular where the liquid is not heated up to a high temperature, like for an infant formula preparation.

### SUMMARY

In view of the above-mentioned problems and drawbacks, the present invention aims to improve the current implementations. An objective is to ensure an enhanced sanitization of the introduced liquid and of the liquid receiving components before the beverage preparation as well as during the beverage preparation, while achieving an optimal mechanical integration in a beverage preparation machine.

The objective is achieved by the embodiments defined in the independent claims. Advantageous implementations are further defined in the dependent claims.

An embodiment of the invention provides a sanitization unit, for sanitizing a liquid to be delivered to a beverage preparation unit, preferably a product compartment of or received in the beverage preparation unit, in order to prepare a beverage, the sanitization unit comprising:
- an irradiation chamber configured to receive an amount of liquid, and
- an irradiation device configured to emit sanitizing radiations into the irradiation chamber so as to sanitize the liquid in the irradiation chamber,
wherein the irradiation chamber comprises:
- a liquid inlet located at a lowermost region of the irradiation chamber for introducing the liquid into the irradiation chamber,
- a liquid outlet located at an uppermost region of the irradiation chamber for discharging the introduced liquid out of the irradiation chamber, and
- an air inlet located at the uppermost region of the irradiation chamber so as to let air enter the irradiation chamber and evacuate the liquid out of the irradiation chamber via the liquid inlet and/or convey the entered air via the liquid outlet and preferably further via and out of a beverage preparation unit.

As the liquid outlet and the liquid inlet are oppositely arranged (lowermost region and uppermost region respectively), the introduced liquid may follow a long path inside the irradiation chamber, for example with a turbulent rotating or swirling motion, such that the introduced liquid may be irradiated for a long enough period of time to ensure its proper sanitization. Further, as the liquid inlet is located in the lowermost region, the introduced liquid may be evacuated out of the irradiation chamber via the liquid inlet by gravity under the pressure of the air entered via the air inlet. Moreover, as the liquid outlet and the air inlet are both located in the uppermost region, the entered air may flow from the air inlet into the liquid outlet directly, hence without carrying along any liquid out of the irradiation chamber. Then, the air flowing via the liquid outlet may drain the beverage preparation unit and a discharge line connecting the liquid outlet to the beverage preparation unit as the case may be. Thus, the respective provision and arrangement of the liquid inlet, liquid outlet and air inlet facilitates the emptying of the irradiation chamber as well as the emptying of the beverage preparation unit and of the product compartment.

In the present disclosure, the terms "uppermost", "lowermost", "upper", "lower", "above" and the like refer to the service configuration of the sanitization unit, hence when it is assembled in a beverage preparation machine and the liquid flows therethrough in order to prepare a beverage. In the present disclosure, the terms "connect" and "fluidly connect" and its derivatives generally refer to a fluidic connection, hence to the possibility for a fluid, say liquid or air, to flow between two connected elements.

The beverage preparation unit can be any kind of unit for preparing a beverage based on liquid be delivered to said beverage preparation unit. For instance, the beverage preparation unit may comprise a product compartment or it may be configured to receive a product compartment to provide a product in the liquid passage of the beverage preparation unit to thus allow preparation of a beverage or any other kind of comestible (like soups) due to interaction of the delivered liquid (like water) and the product, e.g., by extraction, dissolution, etc. The product compartment may thus preferably be: i) a compartment of the beverage preparation unit preferably of a beverage preparation machine, which compartment may for example be filled of product or a product container by a user, and/or ii) an interchangeable compartment like a disposable or reusable product container, for instance a capsule, a pod, a pad or a cartridge.

In some implementations, the height of the uppermost region may be in the range of 80% to 100%, preferably in the range of 90% to 100%, more preferably in the range of 95% to 100%, of the height of the irradiation chamber. In some implementations, the height of the lowermost region may in the range of 0% to 20%, preferably in the range of 0% to 10%, more preferably in the range of 0% to 5%, of the height of the irradiation chamber. The height of the irradiation chamber may be measured as from the lowest point of the irradiation chamber and along a vertical axis when the sanitization unit is in its service configuration.

In some implementations, the irradiation chamber may have at least three ports including the liquid inlet, the air inlet and the liquid outlet, each of the at least three ports emerging in the irradiation chamber. For example, each of the at least three ports may be directly connected the irradiation chamber.

In various implementations, the air inlet is located close to or at the highest level of the irradiation chamber, and/or the liquid outlet is located close to or at the highest level of the irradiation chamber, and/or the liquid inlet is located close to or at the lowest level of the irradiation chamber.

Thus, the liquid outlet makes it possible, when the introduced liquid fills the irradiation chamber, to evacuate the entered air out of the irradiation chamber and toward the discharge line and the product container or product compartment.

Surprisingly, it has been found that the sanitization unit can achieve enhanced liquid sanitization, for instance with a Logarithm reduction close to 4 for MS2 surrogates, when i) the liquid inlet emerges in the lowermost region, resp. at or close to the lowest point, of the irradiation chamber and ii) the liquid outlet emerges in the uppermost region, resp. at or close to the highest point, of the irradiation chamber.

Thus, the liquid inlet makes it possible to completely empty the irradiation chamber when the entered air evacuates the liquid out of the irradiation chamber.

In various implementations, the irradiation device may be positioned with respect to the irradiation chamber so as to be distant from the air inlet, preferably opposite the air inlet and/or opposite the liquid outlet and/or opposite the uppermost region, the irradiation device being preferably located in the lowermost region and/or next to the liquid inlet.

As the irradiation device is distant from, or even opposite, the air inlet, the uppermost region, where the air inlet is located, gets fully exposed to the sanitizing radiations. When evacuating the irradiation chamber, the entered air may flow from a very sanitized side toward a possibly slightly less sanitized side, for example the region surrounding the irradiation device and not directly irradiated by it. Thus, it may be ensured that the entered air will not bring along microorganisms when emptying the irradiation chamber through the discharge line and, if need be, through the liquid inlet.

In some implementations, the irradiation device may extend close to or at the lowest level of the irradiation chamber.

In some implementations, the irradiation device may be configured to emit sanitizing radiations having a fluence of about 20 to 80 mW/cm² and a fluence rate of at least 40 to 90 mJ/cm². Thus, the irradiation device provides a fairly high degree of sanitization, typically of about Log 3 to Log 5 for MS2 phages (Virus surrogate) and a Log 5 to Log 6 for the majority of bacteria.

When the liquid is pumped through the sanitization unit it gets exposed to the sanitizing radiations into the irradiation chamber. The degree of sanitization depends on 1) the fluence or the power of emitted sanitizing radiations (mW/cm²) and 2) the time of exposure or dose or fluence rate (mJ/cm²). The higher the fluence rate or the fluence, the higher the degree of sanitization of the introduced liquid.

In various implementations, the irradiation device comprises a UV light source, preferably at least one UV LED, more preferably several UV LEDs arranged for example as an array of UV LEDs.

Thus, the irradiation device may appropriately irradiate the irradiation chamber and the introduced liquid received therein.

In some implementations, the at least one UV LED may be comprised of a solid state electroluminescent diode configured to emit UV light. The LEDs may be selected to provide a monodispersed light spectrum in the UVB-UVC spectrum (255-300 nm), for example a spectrum centered at 265 nm or 280 nm. Thus, the UV LEDs may be compactly arranged and hence simplify their integration into a beverage preparation machine.

In some implementations, the irradiation chamber may substantially have a spheroidal shape, preferably a spherical shape. Such shape makes it possible for the irradiation device to reach most or all of the surface and volume of the irradiation chamber. Thus, the irradiation chamber and the introduced liquid received therein may be intensively sanitized.

In some implementations, the liquid inlet may be configured to introduce the liquid substantially tangentially to a surface of the irradiation chamber, preferably substantially tangentially to a surface of the lowermost region and/or substantially tangentially to a surface of the irradiation device.

As the liquid is introduced tangentially to a surface of the irradiation chamber, the liquid may promote a swirling flow inside the irradiation chamber, in particular when the irradiation chamber is full of liquid. Thus, the introduced liquid received in the irradiation chamber may be sanitized during an appropriate residence duration.

In some implementations, the surface of the irradiation device extending in the irradiation chamber may extend substantially horizontally when the sanitization unit is in its service configuration. In some implementations, the surface of the irradiation device extending in the irradiation chamber may be substantially planar.

In some implementations, the liquid inlet may be arranged to introduce the liquid along an injection direction in the irradiation chamber, the injection direction forming an angle ranging from 0 degree to 15 degrees, preferably from 3 degrees to 10 degrees, with a horizontal direction when the sanitization unit is in its service configuration. In case this angle is 0 degree, then the liquid inlet extends horizontally and introduces the liquid substantially horizontally in the irradiation chamber. Thus, as the liquid inlet is inclined with respect to a horizontal direction, the emptying of the irradiation chamber is enhanced.

In some implementations, the liquid outlet may be arranged to collect the liquid substantially horizontally when the sanitizing unit is in the service configuration. For example, the liquid outlet may form an angle ranging from 0 degrees to 15 degrees, preferably from 3 degrees to 10 degrees, with a horizontal direction when the sanitization unit is in its service configuration.

In some implementations, the walls defining the irradiation chamber may be made of a material reflecting UV radiations, for example of a material including or constituted by polytetrafluoroethylene (PTFE).

In some implementations, the liquid outlet may be laterally offset from the liquid inlet, in a top view when the sanitization unit is in its service configuration, for example offset by an angle ranging from 70 degrees to 110 degrees, for example of 90 degrees.

In various implementations, the sanitization unit may further comprise an air non-return valve, which is preferably fitted in a wall defining the irradiation chamber, the air non-return valve being preferably arranged close to the air inlet such that most or all of wettable surfaces of the air non-return valve are partially or totally exposed to the radiations of the irradiating device.

The air entered via the air inlet makes it possible to empty the discharge line and the product compartment. Further, the air entered via the air inlet makes it possible to empty the irradiation chamber and return the water to a water drain or the water tank.

Thus, the wettable surfaces may be sanitized by the irradiating device. These wettable surfaces are the surfaces of the air non-return valve that may get in contact with the introduced liquid, as they form a dead volume. The wettable surfaces may include the surfaces of a seat, a spring and a mobile blocking member, for example a ball, composing the air non-return valve. Preferably, the wettable surfaces of the air non-return valve are oriented toward the irradiating device.

In some implementations, the irradiation device may comprise a protective window for letting the emitted sanitizing radiations pass through, the protective window being and arranged to fluidly separate the irradiation chamber from the rest of the irradiation device.

Thus, the protective window may protect the irradiating device while letting its radiations through to irradiate the irradiation chamber.

Preferably, the sealing member may be arranged flush with the wall defining the irradiation chamber close to the protective window. Thus, no dead volume is formed around the protective window, which avoids the growth of microorganisms.

In some implementations, the irradiation device may comprise a sealing member arranged to seal the periphery of the protective window with respect to the irradiation chamber.

In some implementations, the protective window may be made of quartz.

In some implementations, the irradiation chamber may be defined by at least two parts assembled together so as to substantially enclose the irradiation chamber, the sanitization unit further comprising sealing elements arranged between the at least two parts, the sealing elements being arranged flush with the walls defining the irradiation chamber close to the sealing elements, the sealing elements being arranged to be at least partially exposed to the radiations. Thus, no dead volume is formed around the sealing elements, which avoids the growth of microorganisms.

Another embodiment of the invention provides a beverage preparation machine comprising:
- a sanitization unit as afore-described,
- a beverage preparation unit fluidly connected to the liquid outlet,
- a liquid supply unit fluidly connected to the liquid inlet and configured to supply a liquid to the beverage preparation unit via the liquid inlet, the irradiation chamber and the liquid outlet, and
- an air supply fluidly connected to the air inlet so as to let air enter the irradiation chamber via the air inlet and to let the air evacuate the introduced liquid out of the irradiation chamber via the liquid inlet and/or to let the air evacuate the supplied liquid out of the beverage preparation unit via the liquid outlet.

Thus, a beverage may be prepared with a sanitized liquid. Further, the irradiation chamber may be drained and dried out by the entered air and sanitized by the irradiation device after preparation of a beverage, hence before preparing the next beverage.

In the present disclosure, the terms "upstream" and "downstream" refer to the direction of flow of a liquid during the preparation of a beverage using the beverage preparation machine. For example, the liquid supply unit is located upstream the sanitization unit and the beverage preparation unit is located downstream the sanitization unit. During a phase different from the preparation of a beverage, for example when flushing and emptying the sanitization unit, it might happen that a fluid, say liquid or air, flows from an element termed "downstream" to another element termed "upstream".

In some implementations, the beverage preparation machine may further comprise:
- a liquid pump configured to displace the liquid down to the product compartment via the sanitization unit,
- a heating system arranged between the liquid supply and the sanitization unit, the heating system being configured to heat up the liquid during preparation of a beverage,
- an air pump configured to displace air toward the air inlet, and
- a machine control unit configured to control at least the sanitization unit, the liquid pump, the heating system and the air pump as well as valves controlling the flows of the introduced liquid and of the entered air.

In various implementations, the beverage preparation machine may further comprise a first valve arranged in a fluid supply line fluidly connecting the liquid supply unit to the liquid inlet, the first valve being actuatable at least between a first position to allow a liquid flow between the liquid supply unit and the liquid inlet and a second position to allow a liquid flow out of the irradiation chamber via the liquid inlet towards a drainage unit, a drainage tank and/or a liquid tank of the liquid supply unit.

Thus, during preparation of a beverage, the first valve, when actuated to its first position (open), allows liquid to be introduced into the irradiation chamber and then into the product compartment. After preparation of a beverage, the first valve, when actuated to its second position (closed), makes it possible for the entered air to drain the liquid out of the beverage preparation unit, as this is the only path available for the entered air to exit the irradiation chamber. Then, the first valve, when actuated again to its first position (open), makes it possible for the entered air to evacuate liquid out of the irradiation chamber via the liquid inlet and backwards toward the drainage unit and/or the liquid supply, which is preferably a liquid tank of the liquid supply unit.

In some implementations, the first valve may be a two-way valve, a three-way valve or a multiway valve controllable by control signals emitted by a machine control unit. In some implementations, the first valve may be actuated by an electric motor.

In some implementations, the first valve may be actuatable into a third position to stop a liquid flow between the liquid supply unit and the liquid inlet.

In various implementations, the sanitization unit may further comprise a second valve, preferably a check valve, arranged in a discharge line fluidly connecting the liquid outlet to the beverage preparation unit, the second valve being configured to open i) only in one direction from the liquid outlet to the beverage preparation unit so as to prevent liquid from flowing back toward the liquid outlet and ii) only when the pressure difference across the second valve exceeds predetermined a threshold value.

Thus, the second valve may block backpressure generated when a liquid pump of the liquid supply unit is stopped, and thus avoid contamination of the irradiation chamber and the discharge line by some backflowing beverage product as the case may be.

In various implementations, the sanitization unit may be located above at least one of the beverage preparation unit, the liquid supply unit and, preferably, the drainage unit, the sanitization unit being preferably located in an uppermost position of the beverage preparation machine, preferably close to or at the highest position of the beverage preparation machine.

As the sanitization unit lies above the product compartment, it enhances the emptying of the irradiation chamber and the drainage of the liquid out of the irradiation chamber toward the discharge line and the product compartment. Further, the drainage of the liquid out of the irradiation chamber toward the liquid inlet is enhanced as well, as the case may be.

In some implementations, the sanitization unit may be located on a head of the beverage preparation machine.

In various implementations, the beverage preparation machine may further comprise a heating device arranged to transfer heat to at least a portion of a discharge line fluidly connecting the liquid outlet and the beverage preparation unit, the discharge line being preferably made of a thermally conductive material.

Thus, the discharge line may be sanitized by heat, for example before and/or after preparation of a beverage. In case the discharge line has a fairly high thermal conductivity, the heat transferred locally by the heating device may spread to the whole discharge line, thus achieving a complete sanitization thereof.

In some implementations, the discharge line may be made of a metallic tube, for example made of stainless steel.

In various implementations, the beverage preparation machine may further comprise a machine control unit configured for controlling at least one of: the liquid supply unit, the air supply, the beverage preparation unit, the sanitization unit, in particular the irradiation device, and, preferably, the first valve, second valve and the heating device.

In various implementations, the beverage preparation machine may further comprise a flowmeter configured to transmit signals representative of the liquid flow rate in the liquid supply unit. The machine control unit may be linked to the flowmeter so as to receive said signals. The machine control unit may further be configured to regulate the liquid flow rate under a maximum admissible flow rate that is predetermined so as to obtain an appropriate residence time of liquid into the irradiation chamber.

In some implementations, the heating device may comprise:
- a heating element arranged close to or around the discharge line, the heating element preferably having the shape of a cartridge, a torus, a cylinder or a helix,
- a temperature sensor arranged to measure the temperature of the heating element or a portion of the discharge line, and
- a heat control unit configured to control the temperature of the heating element so as to heat the liquid present in the discharge line up to a temperature ranging from 65°C to 90°C.

Thus, the heating device may efficiently sanitize the discharge line.

In some implementations, the temperature sensor may be a thermal measuring resistance of the NTC type or a thermocouple.

Another embodiment of the invention provides a beverage preparation method, for preparing a beverage by delivering a liquid to a product compartment, the beverage preparation method comprising:
- implementing a beverage preparation machine as afore-described;
- activating a liquid supply unit to deliver a liquid via the liquid inlet to the irradiation chamber and further via the liquid outlet to the beverage preparation unit, wherein the irradiation device is activated at least during the delivery of liquid to sanitize the delivered liquid; and
- preparing a beverage with the sanitized liquid with the beverage preparation unit.

In various implementations, the beverage preparation method may further comprise:
- after deactivation of the liquid supply unit, activating the air supply so as to let air enter the irradiation chamber via the air inlet and further enter the beverage preparation unit via the liquid outlet, preferably via the discharge line if present, for flushing and emptying the beverage preparation unit; and
- after deactivation of the liquid supply unit and preferably after said flushing and emptying, activating or maintaining the air supply so as to let air enter the irradiation chamber via the air inlet, preferably placing the first valve in a position to open the supply line fluidly connected to the liquid supply unit; and
- letting the entered air evacuate the liquid out of the irradiation chamber via the liquid inlet and preferably towards the drainage unit or the liquid tank.

In various implementations, the beverage preparation method may further comprise:
- during a filling period to fill the irradiation chamber, activating the liquid supply unit so as to deliver the liquid at a first flow rate; and,
- once the irradiation chamber is filled with liquid, delivering the liquid at a second flow rate higher than the first flow rate for dispensing a beverage.

In some implementations, the first flow rate may vary or fluctuate within a given range, for example between a negligible first flow rate up to a predetermined maximum first flow rate. In some implementations, the second flow rate may vary or fluctuate provided that it is higher than the first flow rate.

In various implementations, the beverage preparation method may further comprise:
- activating the heating device so as to heat up i) the discharge line and preferably ii) the air contained in the discharge line; and/or
- activating or maintaining the air supply so as to let hot air enter the irradiation chamber via the air inlet where the air supply is configured to supply hot air.

In some implementations, the activation of the heating device may occur during or shortly after the activation of the air supply.

It has to be noted that all devices, elements, components, members, units and means described in the present application could be implemented in any technically applicable combination of the implementation forms. All steps which are performed by the various entities described in the present application as well as the functionalities described to be performed by the various entities are intended to mean that the respective entity is adapted to or configured to perform the respective steps and functionalities. Even if, in the following description of specific embodiments, a specific functionality or step to be performed by external entities is not reflected in the description of a specific detailed element of that entity which performs that specific step or functionality, it should be clear for a skilled person that these methods and functionalities can be implemented in any technically applicable combination of the implementation forms.

### BRIEF DESCRIPTION OF DRAWINGS

The above described aspects and implementation forms of the present invention will be explained in the following description of specific embodiments and aspects in relation to the enclosed drawings, in which:
- FIG. 1: is a schematic perspective view illustrating a sanitization unit according to an embodiment of the present invention;
- FIG. 2: is a schematic perspective view, at an angle different from FIG. 1, illustrating the sanitization unit of FIG. 1.
- FIG. 3: is a schematic perspective view, with a cross-section along plane III on FIG. 1, illustrating the sanitization unit of FIG. 1;
- FIG. 4: is a schematic perspective view, with a cross-section along a plane perpendicular to plane III, illustrating the sanitization unit of FIG. 1;
- FIG. 5: is a view of detail V in FIG. 4 on a larger scale;
- FIG. 6: is a schematic hydraulic diagram illustrating a beverage preparation machine according to an embodiment of the present invention and including the sanitization unit of FIG. 1;
- FIG. 7: is a schematic hydraulic diagram illustrating the beverage preparation machine of FIG. 4 during a beverage preparation;
- FIG. 8: is a schematic hydraulic diagram illustrating the beverage preparation machine of FIG. 4 after a beverage preparation and during a drainage process of the beverage preparation machine;
- FIG. 9: is a schematic perspective view illustrating a part of the beverage preparation machine of FIG. 4 including the sanitization unit of FIG. 1;
- FIG. 10: is a schematic perspective view illustrating a part of the beverage preparation machine of FIG. 4 including the sanitization unit of FIG. 1;
- FIG. 11: is a schematic perspective view, at an angle different from FIG. 7, illustrating the part of the beverage preparation machine of FIG. 7;
- FIG. 12: is a schematic perspective view, at an angle different from FIG. 7, illustrating the part of the beverage preparation machine of FIG. 7;
- FIG. 13: is a schematic flowchart illustrating a beverage preparation method according to an embodiment of the present invention;
- FIG. 14: is a schematic flowchart illustrating in detail a drainage process performed in the beverage preparation method of FIG. 13.

### DETAILED DESCRIPTION

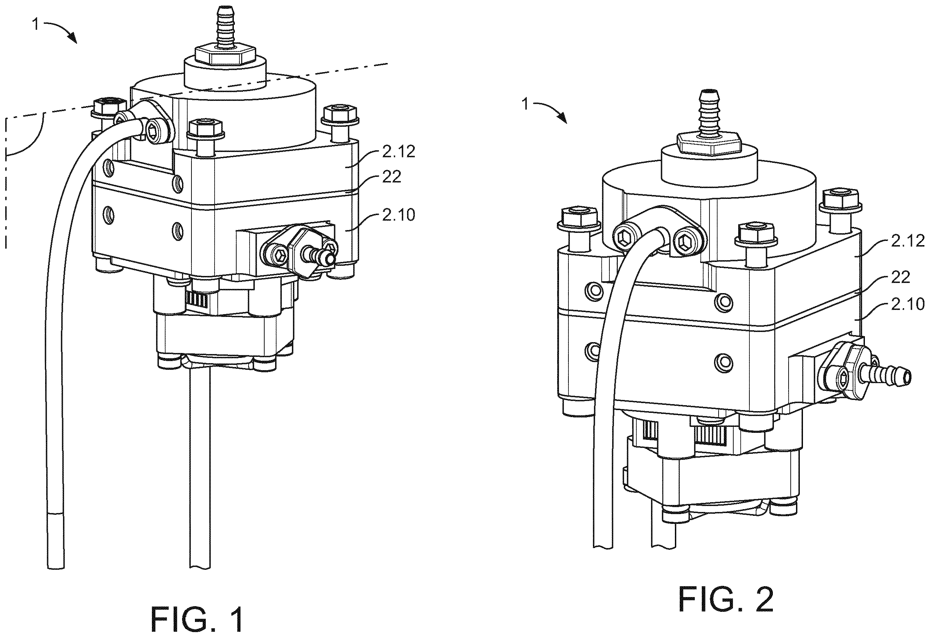

FIGs. 1 to 5 illustrate a sanitization unit 1 for sanitizing a liquid to be delivered to a not shown product compartment in order to prepare a beverage. For example, the sanitization unit 1 may be used to prepare an infant formula preparation when the product compartment encloses an infant formula composition.

The sanitization unit 1 comprises an irradiation chamber 2 configured to receive the liquid. The sanitization unit 1 further comprises an irradiation device 4 configured to emit sanitizing radiations into the irradiation chamber 2.

The irradiation device 4 may be positioned so as to be distant from the air inlet 14, preferably opposite the air inlet 14 and opposite the liquid outlet 12. The irradiation device 4 may be located in a lowermost region 2.1 of in the irradiation chamber 2 and next to the liquid inlet 10 with respect to the irradiation chamber 2. The irradiation device 4 may be arranged in a lowermost region 2.1 of the irradiation chamber 2, for example at the lowest level of the irradiation chamber 2 as in FIGs. 1 to 4.

The irradiation device 4 may be configured to emit sanitizing radiations having a fluence of about 20 to 80 mW/cm² and a fluence rate of at least 40 to 90 mJ/cm², thus enabling a fairly high degree of sanitization.

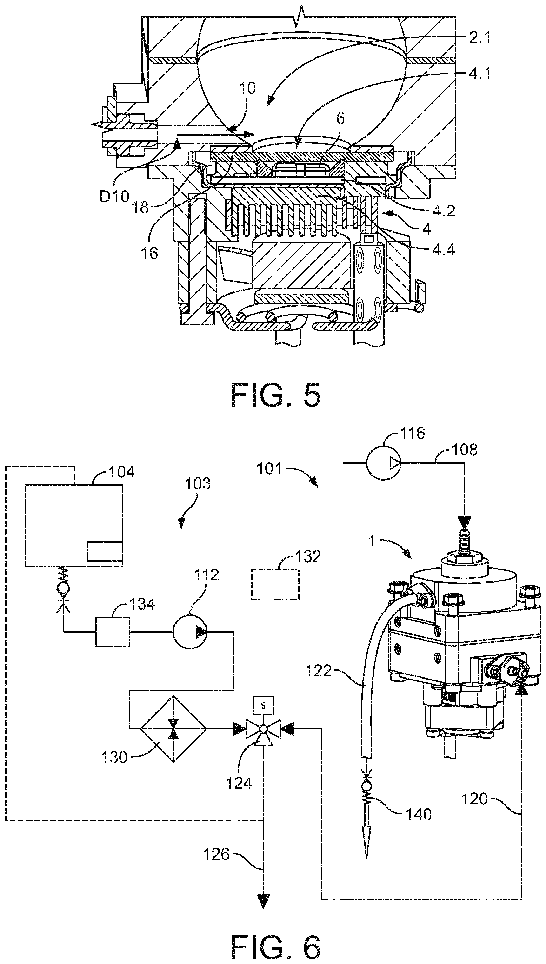

The irradiation device 4 may include a UV light source comprising an array of four UV LEDs 6, two of which are visible in FIG. 5. The UV LEDs may be comprised of solid state electroluminescent diodes and selected to provide a monodispersed light spectrum in the UVB-UVC spectrum (255-300 nm). The UV LEDs 6 may be powered by a not shown DC power source providing a voltage of between 9 V and 12 V and a current of at least 1.2 A. The power consumption of the irradiation device 4 may range from 5 W to 13 W.

The sanitization unit 1 may further include a not shown UV sensor configured to provide a measure representative of the actual radiations, e.g. of the fluence, of the UV LEDs 6 in order to ensure that the UV LEDs 6 keep operating properly.

The irradiation chamber 2 comprises a liquid inlet 10, a liquid outlet 12 and an air inlet 14. In the example of FIGs. 1 to 4, the irradiation chamber 2 may have three ports including the liquid inlet 10, the air inlet 12 and the liquid outlet 12. Each of these three ports may emerge in or be directly connected the irradiation chamber 2.

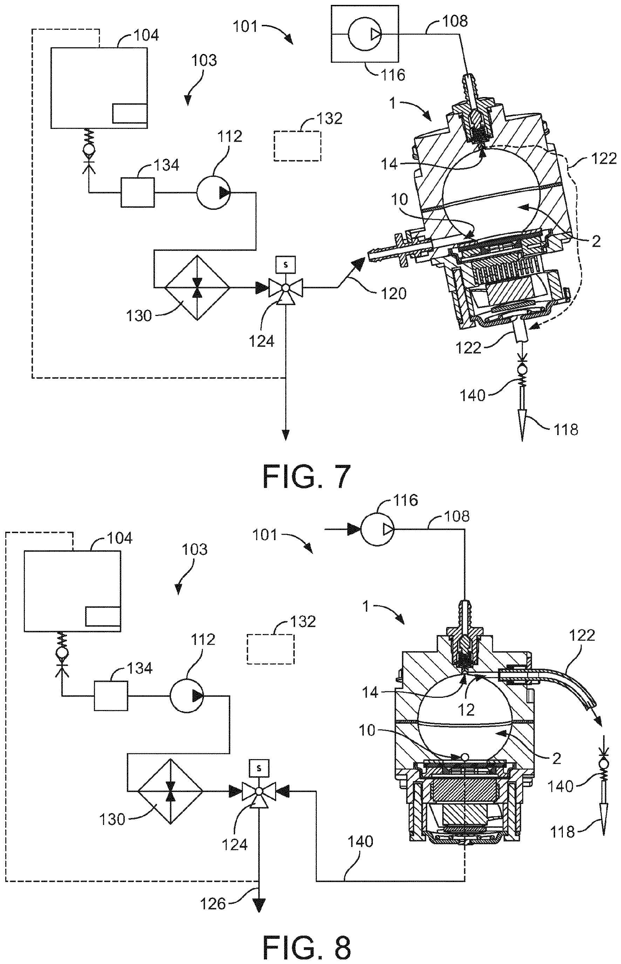

The liquid inlet 10 is located in the lowermost region 2.1 of the irradiation chamber 2 for introducing the liquid into the irradiation chamber 2. The liquid outlet 12 is located in an uppermost region 2.2 of the irradiation chamber 2 for discharging the introduced liquid out of the irradiation chamber 2, in particular toward the not shown product compartment (FIG. 8). The air inlet 14 is located in the uppermost region 2.2 of the irradiation chamber 2 so as to let air enter the irradiation chamber 2 and evacuate the liquid out of the irradiation chamber 2 via the liquid inlet 10, in particular after preparation of a beverage (FIG. 8), and/or convey the entered air via the liquid outlet 12 and preferably further via and out of a beverage preparation unit 102 of a beverage preparation machine 101 as hereafter detailed.

The air inlet 14 may be located at the highest level of the irradiation chamber 2 as in FIGs. 1 to 4. The liquid inlet 10 may be located close to the lowest level of the irradiation chamber 2, for example close to the irradiation device 4 as in FIGs. 1 to 4. The liquid outlet 12 may be located close to the highest level of the irradiation chamber 2, for example close to the air inlet 14 as in FIGs. 1 to 4.

The irradiation device 4 may extend in the irradiation chamber 2 and distant from the air inlet 14, preferably opposite the air inlet 14. In the example of FIGs. 1 to 4, the irradiation device 4 may extend at the lowest level of the irradiation chamber 2, while the air inlet 14 emerges at the highest level of the irradiation chamber 2.

The liquid inlet 10 may be configured to introduce the liquid substantially tangentially to a surface of the irradiation chamber 2, preferably of the lowermost region 2.1. In the example of FIGs. 1 to 5, the liquid inlet 10 may be configured to introduce the liquid substantially tangentially to an upper surface 4.1 of the irradiation device 4 that is planar and horizontal in the service configuration of FIGs. 1 to 4.

The liquid inlet 10 may be arranged to introduce the liquid in the irradiation chamber 2 along an injection direction D10, which forms an angle ranging from 0 degree to 15 degrees with a horizontal direction when the sanitization unit 1 is in its service configuration (FIGs. 1 to 4). In the examples of FIGs. 1 to 6 and 8, this angle is 0 degree, so the liquid inlet 10 extends horizontally. In the example of FIG. 7, this angle is about 10 degrees. As the liquid inlet 10 is inclined with respect to a horizontal direction, the emptying of the irradiation chamber 2 is enhanced.

The liquid outlet 12 may extend be arranged to collect the liquid substantially horizontally when the sanitizing unit 1 is in the service configuration, as in FIGs. 1 to 4. For example, the liquid outlet 12 may form an angle of 0 to 10 degrees with a horizontal direction when the sanitization unit 1 is in its service configuration (FIG. 7 and 8). In a top view when the sanitization unit 1 is in its service configuration (FIG. 7 and 8), the liquid outlet 12 may be laterally offset from the liquid inlet 10, for example offset by an angle ranging of about 90 degrees, as visible in FIGs. 1 and 2.

The irradiation device 4 may comprise a protective window 16 for letting the emitted sanitizing radiations pass through. The protective window 16 may be arranged to separate the irradiation chamber 2 from the rest of the irradiation device 4.

The irradiation device 4 may further comprise a sealing member 18 arranged to seal the periphery of the protective window 16 with respect to the irradiation chamber 2. The protective window 16 and the sealing member 18 may be integrally assembled with the irradiation device 4.

The protective window 16 may be arranged to fluidly separate the irradiation device 4, in particular the UV LEDs 6, from the introduced liquid received in the irradiation chamber 2. The protective window 16 may be made of quartz.

The sealing member 18 may be arranged to seal the protective window 16 with respect to the introduced liquid received in the irradiation chamber 2. The sealing member 18 may be arranged flush with the wall defining the irradiation chamber 2 close to the protective window 16. Thus, no dead volume is formed around the protective window 16, which avoids the growth of microorganisms.

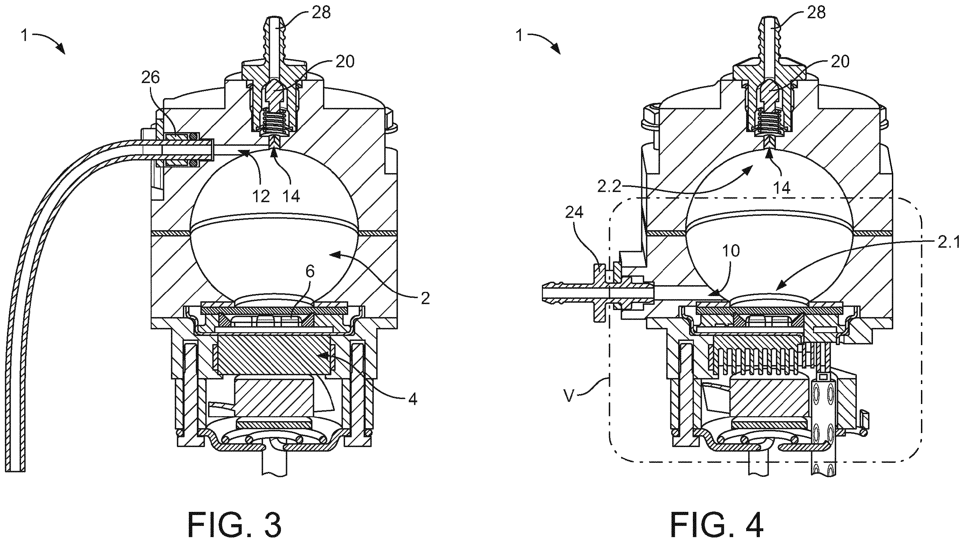

The shape of the irradiation chamber 2 is designed to make it possible for the irradiation device 4 to reach most or all of the surface and volume of the irradiation chamber 2. Thus, the irradiation chamber and the introduced liquid received therein may be appropriately sanitized. The irradiation chamber 2 may substantially have a spheroidal shape. The surfaces defining the irradiation chamber 2 of FIGs. 1 to 4 may form a spherical shape, except the upper surface 4.1 of the irradiation device 4. Indeed, the upper surface 4.1 may be substantially planar and extend substantially horizontally when the sanitization unit 2 is in its service configuration (FIG.3 and 4). The upper surface 4.1 may be defined by the protective window 16.

The UV LEDs 6 may be configured to emit sanitizing radiations under a solid angle covering most or all of the surfaces forming the irradiation chamber 2, which surfaces define the spherical shape of the irradiation chamber 2 in FIGs. 1 to 4.

Further, the walls defining the irradiation chamber 2 may be made of a material reflecting UV radiations, for example of a material including polytetrafluoroethylene (PTFE). The reflection of the UV radiations can enhance the sanitization of the volume and surfaces of the irradiation chamber 2. In particular, the reflected UV radiations may reach portions of the irradiation chamber 2 that are not directly irradiated by the UV radiations emitted by the UV LEDs 6.

The irradiation device 4 may include a PCB (Printed circuit board) 4.2, on which the UV LEDs 6 may be arranged. The PCB 4.2 may be formed of an aluminum or aluminum alloy substrate. The PCB 4.2 may integrate the not shown UV sensor. The irradiation device 4 may further include a heat sink 4.4, on which the PCB 4.2 may be mounted in order to evacuate the heat generated by the UV LEDs 6. Cooling the UV LEDs 6 avoids degrading their performances as well as a shift in their light spectrum, hence obtain a reliable sanitization performance.

Also, the liquid entering in the sanitization unit 1 may serve as a coolant in order to evacuate part or all of the heat generated by the UV LEDs 6. This evacuated heat does not much influence the temperature of the liquid since the liquid volume flowing through the sanitization unit 1 is quite large.

The PCB 4.2 may include a NTC temperature sensor configured to deliver a signal representative of the temperature of the UV LEDs 6. This signal may be used to manage a safety check as the temperature of the UV LEDs 6 may be monitored. Preferably, the temperature of the UV LEDs 6 should not exceed 55°C.

As the liquid outlet 12 and the liquid inlet 10 are oppositely arranged, respectively in the lowermost region 2.1 and uppermost region 2.2, the introduced liquid may follow a long path inside the irradiation chamber 2, for example with a swirling motion, such that the introduced liquid may be irradiated for a long enough period of time to ensure its proper sanitization.

The sanitization unit 1 may further comprise an air non-return valve 20 that is fitted in a wall defining the irradiation chamber 2. The air non-return valve 20 may be arranged close to the air inlet 10 such that most or all of the wettable surfaces of the air non-return valve 20 may get partially or totally exposed to the irradiation of the irradiation device 4. The arrangement of the air non-return valve 20 opposite the irradiation device 4 enhances the sanitization of the wettable surfaces of the air non-return valve 20.

The irradiation chamber 2 may be defined by at least two parts, for example a lower part 2.10 and an upper part 2.12. In the example of FIGs. 1 to 4, the lower part 2.10 accommodates the liquid inlet 10, while the upper part 2.12 accommodates the liquid outlet 12. The lower part 2.10 and the upper part 2.12 may be assembled together so as to substantially enclose the irradiation chamber 2.

The sanitization unit 1 may further comprise a sealing element 22, which is arranged between the lower part 2.10 and the upper part 2.12. The sealing element 22 may be arranged flush with the walls defining the irradiation chamber 2 close to the sealing element 22. Besides, the sealing element 22 may be arranged to be at least partially exposed to the UV radiations emitted by the UV LEDs 6. Thus, no dead volume is formed around the sealing element 22, which avoids the growth of microorganisms.

As illustrated in FIGs. 3 and 4, the sanitization unit 1 may also comprise a liquid inlet connector 24, a liquid outlet connector 26 and an air inlet connector 28. The liquid inlet connector 24 may be secured to, for example screwed onto, the lower part 2.10. The liquid outlet connector 26 may be secured to, for example screwed onto, the upper part 2.12. The air inlet connector 28 may be secured to, for example screwed onto, the upper part 2.12.

Respective channels may extend through the lower part 2.10 and the upper part 2.12 so as to fluidly connect i) the liquid inlet connector 24 to the liquid inlet 10, ii) the liquid outlet connector 26 to the liquid outlet 12, and iii) the air inlet connector 28 to the air inlet 14.

FIGs. 6 to 8 illustrate a beverage preparation machine 101 for preparing a beverage by delivering an amount of liquid to a not shown product compartment. The beverage preparation machine 101 comprises the sanitization unit 1.

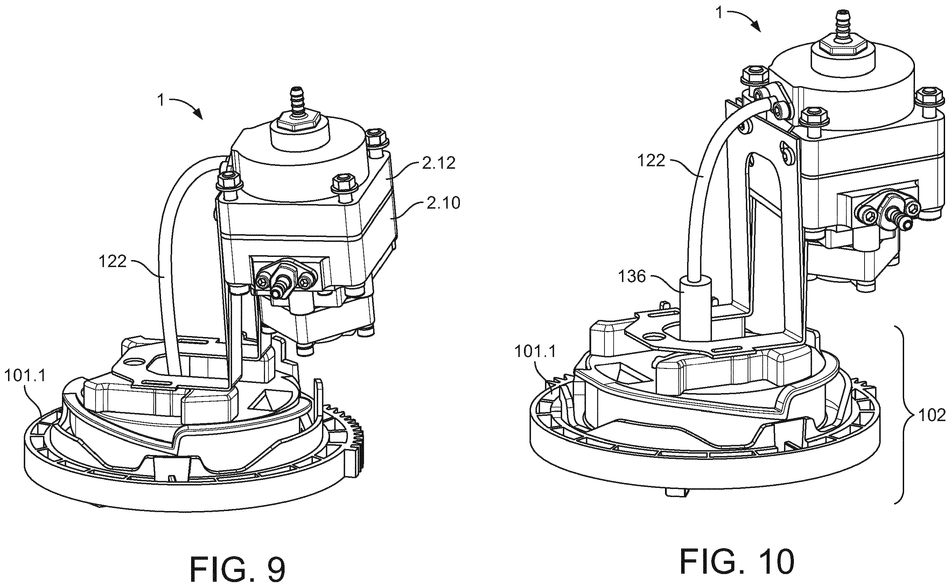

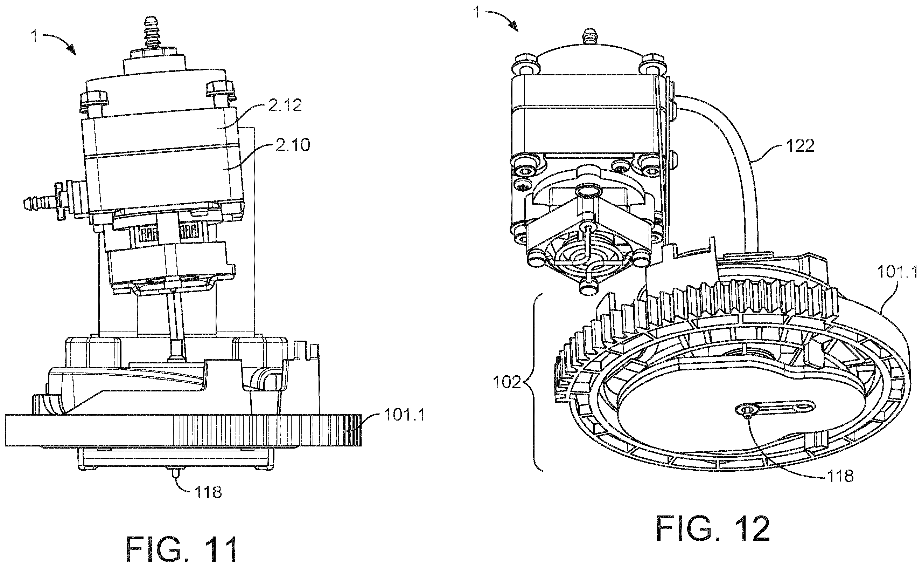

The sanitization unit 1 may be located above at least one of the beverage preparation unit 102, the liquid supply unit 104 and a drainage unit 126. The sanitization unit 1 may be located in an uppermost position of the beverage preparation machine 101, for example at the highest position, for example on a head 101.1, of the beverage preparation machine 101 as illustrated in FIGs. 9 to 12. As the sanitization unit 1 lies above the product compartment, the gravity can enhance the evacuation of the liquid out of the irradiation chamber 2 via the liquid inlet 10 and the drainage of the discharge line 122 toward the product compartment.

The beverage preparation machine 101 further comprises:
- a beverage preparation unit 102 fluidly connected to the liquid outlet 12,
- a liquid supply unit 103 fluidly connected to the liquid inlet 10 and configured to supply a liquid to the beverage preparation unit 102 via i) the liquid inlet 10, ii) the irradiation chamber 2 and iii) the liquid outlet 12, and
- an air supply 108 fluidly connected to the air inlet 14 so as to let air enter the irradiation chamber 2 via the air inlet 14 and evacuate the introduced liquid out of the irradiation chamber 2 via the liquid inlet 10 and/or evacuate the supplied liquid out of the beverage preparation unit 102 via the liquid outlet 12.

The liquid supply unit 103 may comprise at least one supply line, which is configured to guide the liquid, and a liquid pump 112, which is configured to displace the liquid in this supply line. The liquid pump 112 may dispense liquid to the product compartment under a pressure higher than 5 bar in order to achieve a high velocity so as to properly dissolve or extract the nutritional elements. The liquid pump 112 may for example be a type EK2 piston pump.

The air supply 108 may comprise at least one fluid line to guide air and an air pump 116 configured to move the air in this fluid line. The air entering the air inlet 14 may be compressed air, for example under an air pressure of between 0,3 bar and 3,0 bar, preferably of between 0,5 bar and 2,0 bar.

The beverage preparation unit 102 may comprise an opening device for opening the product compartment, for example a hollow needle 118, as illustrated in FIGs. 1 to 8, 11 and 12. The hollow needle 118 may be configured for piercing a lid of the product compartment and for injecting the liquid therein. The beverage preparation unit 102 may further comprise a not shown opening actuator configured for actuating the opening device so as to open the product compartment.

The beverage preparation machine 101 may further comprise an upstream duct 120 and a discharge line 122, which are arranged respectively upstream and downstream of the sanitization unit 1. The upstream duct 120 may be fluidly connected to the liquid inlet 10, and the discharge line 122 may be fluidly connected to the liquid outlet 12.

The upstream duct 120 may be arranged to guide the liquid supplied by the liquid supply unit 103 to the sanitization unit 1. The liquid supply unit 103 may comprise a liquid tank 104, for example a water tank, and the liquid may be tapwater. The discharge line 122 may be arranged to guide the liquid between the sanitization unit 1 and the not shown product compartment via the hollow needle 118.

The beverage preparation machine 101 may further comprise a first valve 124, which is arranged in a fluid supply line fluidly connecting the liquid supply unit 103 to the liquid inlet 10. The first valve 124 may be actuatable between:
- a first position (FIG. 7) to allow a liquid flow between the liquid supply unit 103 and the liquid inlet 10, and
- a second position (FIG. 8) to allow a liquid flow out of the irradiation chamber 2 via the liquid inlet 10 and towards a drainage unit 126, which preferably comprises a drainage line, and which guides the evacuated liquid toward a drainage tank and/or the liquid tank 104.

The first valve 124 may be a two-way valve like in FIGs. 6 to 8, a three-way valve or a multiway valve. The first valve 124 may be:
- normally open, thus fluidly connecting the supply unit 103 with the liquid inlet 10, preferably via the illustrated upstream duct 120, and
- shut when its electric actuator is powered, thus fluidly connecting the liquid inlet 10, preferably via the illustrated upstream duct 120, to the drainage unit 126.

As illustrated in FIGs. 6 to 8, the beverage preparation machine 101 may further comprise:
- a heating system 130 arranged between the liquid supply unit 103 and the sanitization unit 1, the heating system 130 being configured to heat up the liquid during preparation of a beverage,
- a machine control unit 132 configured to control at least the sanitization unit 1, hence the irradiation device 4, the liquid pump 112, the air pump 116, the sanitization unit 1, the first valve 124, the heating system 130, the second valve 140 and the air non-return valve 20, and
- a flowmeter 134 arranged between the liquid tank 104 and the liquid pump 112 to measure the flow rate of liquid.

The heating system 130 and the flowmeter 134 are fluidly connected to the supply line that fluidly connects the liquid supply unit 103 and the liquid inlet 10. The machine control unit 132 may be configured to control the heating system 130, the liquid pump 112 and the air pump 116.

The machine control unit 132 may be linked, e.g. electrically or wirelessly, to the flowmeter 134 so as to receive signals transmitted by the flowmeter 134 and representative of the liquid flow rate. The machine control unit 132 may be configured to regulate the liquid flow rate based on those signals. For example, the machine control unit 132 may regulate the liquid flow rate under a maximum admissible flow rate that is predetermined so as to obtain an appropriate residence time of liquid into the irradiation chamber 2 in order to achieve a proper sanitization of said liquid.

As illustrated in FIG. 10 the beverage preparation machine 101 may further comprise a heating device 136, which is arranged to transfer heat to at least a portion of the discharge line 122, for example substantially to the whole of the discharge line 122. The discharge line 122 may be made of a thermally conductive material, for example of metal, in particular of stainless steel. The heating device 136 is not shown on the partial FIGs. 9, 11 and 12.

The heating device 136 may comprise a heating element, a temperature sensor and a heat control unit. The heating element may be arranged around the discharge line 122 and have the shape of a cartridge heater. The temperature sensor may be arranged to measure the temperature of the heating element or of a portion of the discharge line 122. The temperature sensor may be a thermal measuring resistance of the NTC type. The heat control unit may be configured to control the temperature of the heating element so as to heat the liquid present in the discharge line 122 up to a temperature ranging from 65°C to 90°C, for example about 75 degrees.

The beverage preparation machine 101 may further comprise a second valve 140, which is arranged in a line fluidly connecting the liquid outlet 12 and the beverage preparation unit 102. The second valve 140 may be configured to open i) only in one direction from the liquid outlet 12 to the beverage preparation unit 102 so as to prevent liquid from flowing back toward the liquid outlet 12 and ii) only when the pressure difference across the second valve 140 exceeds a predetermined threshold value, for example of about 0,5 bar. In the example of FIGs. 7 and 8, the second valve 140 may be a check valve or non-return valve and it may be located immediately upstream the opening device (hollow needle 118).

When the beverage preparation machine 101 is in service, it may carry out a beverage preparation method according to an embodiment for preparing a beverage by delivering liquid to the product compartment. The beverage preparation method comprises:
- activating the liquid supply unit 103 to deliver a liquid via the liquid inlet 10 to the irradiation chamber 2 and further via the liquid outlet 12 to the beverage preparation unit 102;
- activating the irradiation device 4 at least during the delivery of liquid to sanitize the delivered liquid; and
- preparing a beverage with the sanitized liquid via the beverage preparation unit 102.

The beverage preparation method may further comprise:
- after deactivation of the liquid supply unit 103, activating the air supply 108, 116 so as to let air enter the irradiation chamber 2 via the air inlet 14 and further enter the beverage preparation unit 102 via the liquid outlet 12, preferably via the discharge line 122 if present, for flushing and emptying the beverage preparation unit 102 and possibly the discharge line 122 and the product compartment; and/or
- after deactivation of the liquid supply unit 103 and preferably after said flushing and emptying, activating or maintaining the air supply 108 so as to let air enter the irradiation chamber 2 via the air inlet 14, preferably placing the first valve 124 in a position to open of the first valve 124 and evacuating, by the entered air, the liquid out of the irradiation chamber 2 via the liquid inlet 10 and preferably towards the drainage unit 126 or the liquid tank 104.

The beverage preparation method may further comprise: closing the first valve 124 and draining, by the entered air, the liquid out of the beverage preparation unit 102. This draining operation may be performed before the evacuating operation.

The beverage preparation method may further comprise:
- draining the evacuated liquid into the drainage unit 126,
- during a filling period to fill the irradiation chamber 2, activating the liquid supply unit 103 so as to deliver the liquid at a first flow rate, and
- once the irradiation chamber 2 is filled with liquid, delivering the liquid at a second flow rate higher than the first flow rate for dispensing a beverage.

As the liquid outlet 12 and the air inlet 14 are both located in the uppermost region 2.1, the entered air may flow from the air inlet 14 into the liquid outlet 12 directly, hence without conveying liquid, and then drain the beverage preparation unit 102. Then, as the liquid inlet 10 is located in the lowermost region 2.1, the introduced liquid may be evacuated out of the irradiation chamber 2 via the liquid inlet 10 by gravity under the pressure of the entered air.

The beverage preparation method may further comprise:
- preferably during or (shortly) after the activation of the air supply, activating the heating device 136 so as to heat up i) the discharge line 122 and preferably ii) the air contained in the discharge line 122; and/or
- activating or maintaining the air supply 108 so as to let hot air enter the irradiation chamber 2 via the air inlet 14 where the air supply 108 is configured to supply hot air, the temperature of which may range from 40°C to 70°C.

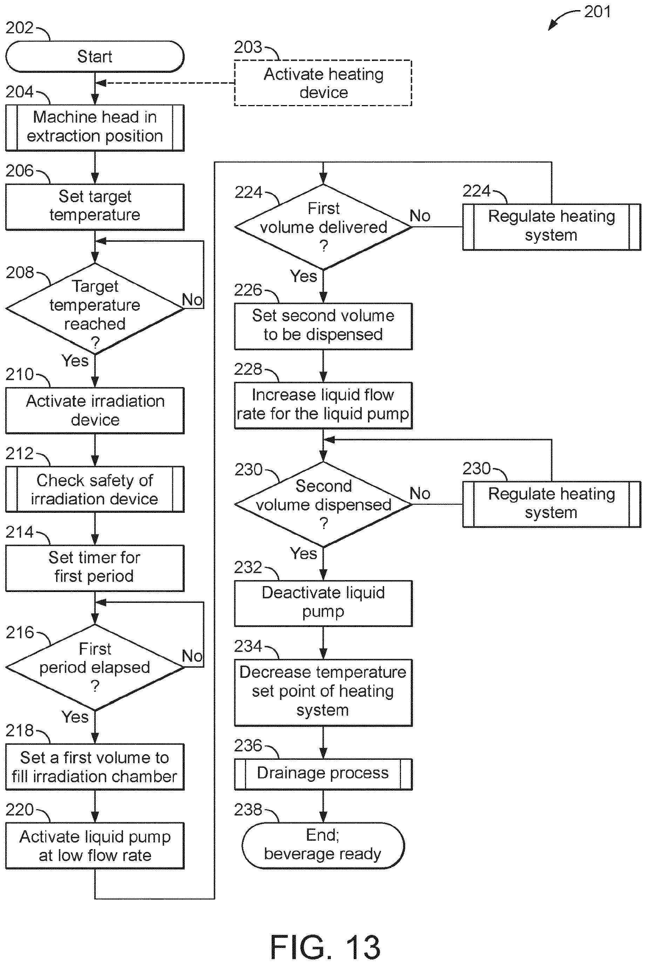

FIG. 13 illustrates some steps of a beverage preparation method 201 when the beverage preparation machine 101 and the sanitizing unit 1 are in service. The indications written in FIG. 13 are merely added to enhance the legibility of the flowchart. Further steps may be performed that are not illustrated in FIG. 13.

The beverage preparation method 201 may be controlled by the machine control unit 118. The irradiation chamber 2 is empty at the beginning of the beverage preparation method 201. The beverage preparation method 201 may comprise:
- 202) Starting the beverage preparation method 201, hence also the beverage preparation machine 101.
- 203) The heating device 136 may be activated during a brief disinfection period, in order to disinfect the discharge line 122, for example by heating up the discharge line 122 at about 75°C.
- 204) Placing the machine head 101.1 in an extraction position.
- 206) Setting a target temperature of the heating system 130, e.g. 43°C in the case of an infant formula preparation.
- 208) Checking whether the set target temperature has been reached. If not, waiting until the set target temperature has been reached.
- 210) Activating the irradiation device 4, for example powering on the UV LEDs 6, during a first period, e.g. of 5 s, before filling the irradiation chamber 2 with the liquid.
- 212) Checking safety of the irradiation device 4, for example of the UV LEDs 6.
- 214) Setting a timer for the first period during which the irradiating device 4 remains activated.
- 216) Checking whether or waiting until the first period is ended, in which case the set target temperature has been reached.
- 218) Set a first volume for the liquid to be introduced into the irradiation chamber 2. The first volume may be set substantially equal, or strictly equal, to the volume of the irradiation chamber 2.
- 220) Activating the liquid pump 112 to pump liquid, e.g. water, from the liquid supply 104 and to push the liquid through the heating system 130 and the first valve 124 in order to fill the irradiation chamber 2.

The liquid is introduced into the irradiation chamber 2 through the liquid inlet 10, for example along the injection direction D10 that is tangential to the upper surface 4.1 of the irradiation device 4. The liquid may be introduced at a low flow rate, for example ranging from 50 to 200 ml/min) in order to avoid or minimize the formation of air bubbles by cavitation, hence to maximize the fluence rate of the UV light in the liquid introduced in the irradiation chamber 2.

During the filling of the irradiation chamber 2, the air held in the irradiation chamber 2 is pushed toward the liquid outlet 12 and compressed in the product compartment. Due in part to the arrangement of the liquid inlet 10, the liquid outlet 12 and the air inlet 14, there remains no air in the irradiation chamber 2, thus avoiding that the liquid flows along too short a path through the irradiation chamber 2.
- 222) Activating the irradiation device 4, for example powering on the UV LEDs 6, during a second period, e.g. of 10 s, in order to ensure that the irradiation chamber 2 is wholly exposed to UV radiations and that the liquid received therein gets sanitized. The second period may directly follow the first period, thus involving a continuous activation of the irradiation device 4.

The irradiation device 4 may be continuously activated (UV LEDs ON) all along the beverage preparation method 201, in order to ensure the sanitization unit 1 gets thoroughly disinfected, even during the injection of air by the air pump 116. Alternatively, the second period and the first period may be separated by a rest period during which the irradiation device is not activated.
- 224) Checking whether or waiting until the first volume has been delivered by the liquid pump 112, while regulating the temperature of the heating system 130. When performing this step the machine control unit 118 may analyze the data emitted by the flowmeter 134.
- 226) Set a second volume for the liquid to be dispensed in the product compartment. The second volume may be set as the difference between i) the volume required in the beverage recipe and ii) the volume filling the irradiation chamber 2.
- 228) as of step 220) the irradiation chamber 2 is filled with liquid; activating the liquid pump 112 at an increased flow rate, for example at a maximum admissible flow rate of 400 ml/min, in order to push liquid into the product compartment and hence properly dissolve or extract the product.

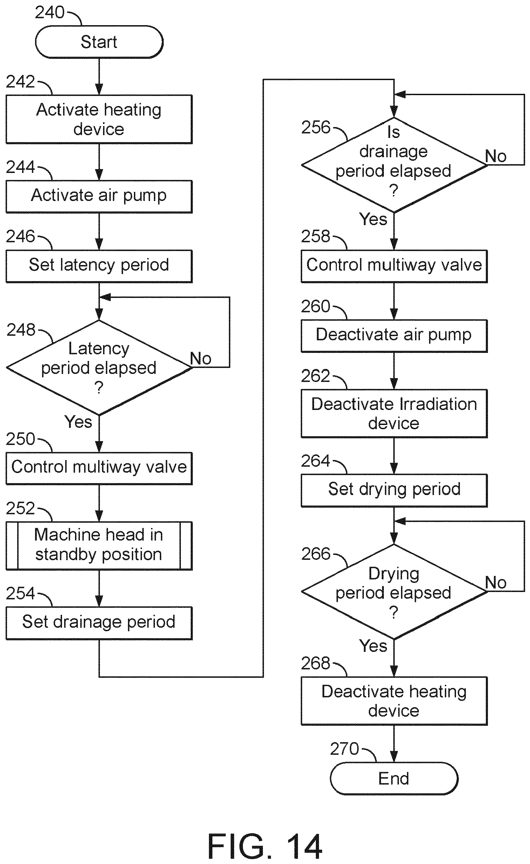

The liquid flows out the liquid outlet 12 on top of the irradiation chamber 2 toward the product compartment via the discharge line 122 the liquid non-return valve 111 and the opening device (hollow needle 118). The liquid may thus dissolve or extract the product in the product compartment.
- 230) Checking whether or waiting until the second volume has been dispensed, while regulating the temperature of the heating system 130.
- 232) Deactivating the liquid pump 112.
- 234) Decreasing the temperature set point of the heating system 130, e.g. to a standard preheating temperature.
- 236) Performing a drainage process (FIG. 14) for draining liquid out of the irradiation chamber 2 and out of the discharge line 122 toward a drainage duct 122 and/or back toward the liquid supply 104.
- 238) After the step of dissolving or extracting, the beverage preparation method 201 is completed and the beverage is ready to drink.

Some steps of the beverage preparation method 201 may be performed in parallel when applicable, as for example steps 212) and 214). Besides, some steps of the beverage preparation method 201 are optional.

FIG. 14 illustrates an embodiment of the drainage process for performing step 236. In order to set the beverage preparation machine 101 ready for preparing the next beverage, the beverage preparation method 201 may further comprise the following drainage process as mentioned in step 236) above:
- 240) Starting the drainage process.
- 242) Heating the heating device 136 so as to heat up the discharge line 122 to e.g. about 75°C.
- 244) Activating the air pump 116 so as to evacuate the liquid out of the irradiation chamber 2, the discharge line 122, the beverage preparation unit 102 and the product compartment. The period of injection of air may be selected to ensure that the air stream circulates in the whole discharge line 122, along the beverage preparation unit 102, the product compartment, and/or in the whole irradiation chamber 2 and along the upstream duct 120 and the drainage unit 126 via the first valve 124.

Advantageously, the product compartment is fully emptied in order to ensure a good nutrition monitoring as performed by a not shown monitoring platform from which the product consumption is directly uploaded by the beverage preparation machine 101.

The entered air delivered by the air pump 116 can also empty the irradiation chamber 2 by pushing the liquid remaining therein through the liquid inlet 10 and the upstream duct 120. Thus, the arrangement of the air inlet 14 in the uppermost region 2.2 facilitates the emptying of the irradiation chamber 2 as well as the emptying of the product compartment and of a discharge line 122 of the beverage preparation machine 101.

The flow rate of the entered air may preferably be equal to or lower than the liquid flow rate during the liquid supply to the product compartment.
- 246) Setting a minimum latency period of e.g. 5 seconds so as to let the liquid be evacuated from the discharge line 122, the beverage preparation unit 102 and the beverage compartment. Meanwhile, the heating device 136 is activated to dry out the discharge line 122 in order to avoid the growth of microorganisms therein.
- 248) Checking whether or waiting until the latency has elapsed.
- 250) Controlling the first valve 124 in order to evacuate the remaining liquid out of the irradiation chamber 2 and guide it toward the drainage unit 126 and/or back toward the liquid tank 104.

Thus, the liquid inlet 10 makes it possible to completely empty the irradiation chamber 2 when the entered air evacuate the liquid out of the irradiation chamber 2. The gravity might contribute evacuating the liquid out of the irradiation chamber 2.
- 252) Placing the machine head 101.1 in a standby position.
- 254) Setting a timer for a drainage period, of a few seconds, in order to ensure the irradiation chamber 2 and the upstream duct 120 have been emptied by the entered air. Optionally, activating or maintaining the air supply 108 so as to let hot air enter the irradiation chamber 2 via the air inlet 14 where the air supply 108 is configured to supply hot air. For example, hot air may have a temperature ranging from 40 to 70°C.
- 256) Checking whether or waiting until the drainage period has elapsed.
- 258) Controlling the first valve 124 back to its normally open position, hence ready to guide liquid toward the irradiation chamber again.
- 260) Deactivating the air pump 116.
- 262) Deactivating the irradiation device 4.
- 264) Setting a timer for a drying period of e.g. 5 minutes in order to dry out the discharge line 122 by means of the heating element 136 and/or hot air.
- 266) Checking whether or waiting until the drying period has elapsed.
- 268) Deactivating the heating device 136.
- 270) End of the drainage process; the beverage preparation machine 101 is ready for preparing the next beverage.

Besides, the beverage preparation method 201 may also include the following step, which is not shown in FIGs. 13 and 14: Regularly rinsing the beverage preparation machine 1 and the sanitization unit with a liquid heated up to a disinfection temperature of e.g. 75°C by the heating system 130. For example, such a rinsing step may be repeated every 24 hours or after a predetermined number of hours has elapsed since the last beverage preparation method has been completed. Such a rinsing step ensures that no biofilm can form in the beverage preparation machine 201.

The present invention has been described in conjunction with various embodiments and implementations as examples. However, other variations can be understood and effected by those persons skilled in the art within the scope of protection defined by the claims.

## Claims

1. Sanitization unit (1), for sanitizing a liquid to be delivered to a beverage preparation unit (102) in order to prepare a beverage, the sanitization unit (1) comprising:
- an irradiation chamber (2) configured to receive an amount of liquid, and
- an irradiation device (4) configured to emit sanitizing radiations into the irradiation chamber (2) so as to sanitize the liquid in the irradiation chamber (2),
wherein the irradiation chamber (2) comprises:
- a liquid inlet (10) located in a lowermost region (2.1) of the irradiation chamber (2) for introducing the liquid into the irradiation chamber (2),
- a liquid outlet (12) located in an uppermost region (2.2) of the irradiation chamber (2) for discharging the introduced liquid out of the irradiation chamber (2), the sanitization unit 1) being **characterized by**
- an air inlet (14) located in the uppermost region (2.2) of the irradiation chamber (2) so as to let air enter the irradiation chamber (2) and evacuate the liquid out of the irradiation chamber (2) via the liquid inlet (10) and/or convey the entered air via the liquid outlet (12).

2. Sanitization unit (1) according to claim 1, wherein the air inlet (14) is located close to or at the highest level of the irradiation chamber (2), and/or wherein the liquid outlet (12) is located close to or at the highest level of the irradiation chamber (2), and/or wherein the liquid inlet (10) is located close to or at the lowest level of the irradiation chamber (2).

3. Sanitization unit (1) according to any one of the preceding claims, wherein the irradiation device (4) is positioned with respect to the irradiation chamber (2) so as to be distant from the air inlet (14), preferably opposite the air inlet (14) and/or opposite the liquid outlet (12) and/or opposite the uppermost region (2.2), the irradiation device (4) being preferably located in the lowermost region (2.1) and/or next to the liquid inlet (10).

4. Sanitization unit (1) according to any one of the preceding claims, wherein the irradiation device (4) comprises a UV light source, preferably at least one UV LED, more preferably several UV LEDs (6) arranged for example as an array of UV LEDs.

5. Sanitization unit (1) according to any one of the preceding claims, further comprising an air non-return valve (20), which is preferably fitted in a wall defining the irradiation chamber (2), the air non-return valve (20) being preferably arranged close to the air inlet (14) such that most or all of wettable surfaces of the air non-return valve (20) are partially or totally exposed to the radiations of the irradiating device (40).

6. Beverage preparation machine (101) comprising:
- a sanitization unit (1) according to any one of the preceding claims,
- a beverage preparation unit (102) fluidly connected to the liquid outlet (12),
- a liquid supply unit (103) fluidly connected to the liquid inlet (10) and configured to supply a liquid to the beverage preparation unit (102) via the liquid inlet (10), the irradiation chamber (2) and the liquid outlet (12), and
- an air supply (108) fluidly connected to the air inlet (14) so as to let air enter the irradiation chamber (2) via the air inlet (14) and evacuate the introduced liquid out of the irradiation chamber (2) via the liquid inlet (10) and/or evacuate the supplied liquid out of the beverage preparation unit (102) via the liquid outlet (12).

7. Beverage preparation machine (101) according to claim 6, further comprising a first valve (124) arranged in a fluid supply line fluidly connecting the liquid supply unit (103) to the liquid inlet (10), the first valve (124) being actuatable at least between: i) a first position to allow a liquid flow between the liquid supply unit (103) and the liquid inlet (10) and ii) a second position to allow a liquid flow out of the irradiation chamber (2) via the liquid inlet (10) towards a drainage unit (126), a drainage tank and/or a liquid tank (104) of the liquid supply unit (103).

8. Beverage preparation machine (101) according to any one of claims 6 to 7, further comprising a second valve (140), preferably a check valve, arranged in a discharge line (122) fluidly connecting the liquid outlet (12) to the beverage preparation unit (102), the second valve (140) being configured to open i) only in one direction from the liquid outlet (12) to the beverage preparation unit (102) so as to prevent liquid from flowing back toward the liquid outlet (12) and ii) only when the pressure difference across the second valve (140) exceeds a predetermined threshold value.

9. Beverage preparation machine (101) according to any one of claims 6 to 8, wherein the sanitization unit (1) is located above at least one of the beverage preparation unit (102), the liquid supply unit (103) and, preferably, the drainage unit (126), the sanitization unit (1) being preferably located in an uppermost position of the beverage preparation machine (101).

10. Beverage preparation machine (101) according to any one of claims 6 to 9, further comprising a heating device (136) arranged to transfer heat to at least a portion of a discharge line (122) fluidly connecting the liquid outlet (12) and the beverage preparation unit (102), the discharge line (122) being preferably made of a thermally conductive material.

11. Beverage preparation machine (101) according to any one of claims 6 to 10, further comprising a machine control unit configured for controlling at least one of: the liquid supply unit (103), the air supply (108), the beverage preparation unit (102), the sanitization unit (1) and, preferably, the first valve (124), second valve (140) and the heating device (136).

12. Beverage preparation machine (101) according to any one of claims 6 to 11, further comprising a flowmeter (134) configured to transmit signals representative of the liquid flow rate in the liquid supply unit (103),
wherein preferably the machine control unit (132) is linked to the flowmeter (134) so as to receive said signals, wherein preferably the machine control unit (132) is further configured to regulate the liquid flow rate under a maximum admissible flow rate that is predetermined so as to obtain an appropriate residence time of liquid into the irradiation chamber (2).

13. Beverage preparation method, for preparing a beverage by delivering a liquid to a beverage preparation unit (102), the beverage preparation method comprising:
- implementing a beverage preparation machine (101) according to any one of claims 6 to 12;
- activating a liquid supply unit (103) to deliver a liquid via the liquid inlet (10) to the irradiation chamber (2) and further via the liquid outlet (12) to the beverage preparation unit (102), wherein the irradiation device (4) is activated at least during the delivery of liquid to sanitize the delivered liquid; and
- preparing a beverage with the sanitized liquid with the beverage preparation unit (102).

14. Beverage preparation method according to claim 13, further comprising:
- after deactivation of the liquid supply unit (103), activating the air supply (108) so as to let air enter the irradiation chamber (2) via the air inlet (14) and further enter the beverage preparation unit (102) via the liquid outlet (12), preferably via the discharge line (122) if present, for flushing and emptying the beverage preparation unit (102); and
- after deactivation of the liquid supply unit and preferably after said flushing and emptying, activating or maintaining the air supply (108) so as to let air enter the irradiation chamber (2) via the air inlet (14), preferably placing the first valve (124) in a position to open the supply line fluidly connected to the liquid supply unit (103) and evacuating, by the entered air, the liquid out of the irradiation chamber (2) via the liquid inlet (10) and preferably towards the drainage unit (126) or the liquid tank (104).

15. Beverage preparation method according to any one of claims 13 to 14, further comprising:
- during a filling period to fill the irradiation chamber (2), activating the liquid supply unit (103) so as to deliver the liquid at a first flow rate; and,
- once the irradiation chamber (2) is filled with liquid, delivering the liquid at a second flow rate higher than the first flow rate for dispensing a beverage.

16. Beverage preparation method according to any one of claims 13 to 15, further comprising:
- activating the heating device (136) so as to heat up i) the discharge line (122) and preferably ii) the air contained in the discharge line (122); and/or
- activating or maintaining the air supply (108) so as to let hot air enter the irradiation chamber (2) via the air inlet (14) where the air supply (108) is configured to supply hot air.

## Patentansprüche

1. Desinfektionseinheit (1) zum Desinfizieren einer Flüssigkeit, die an eine Getränkezubereitungseinheit (102) abgegeben werden soll, um ein Getränk zuzubereiten, die Desinfektionseinheit (1) umfassend:
- eine Bestrahlungskammer (2), die konfiguriert ist, um eine Flüssigkeitsmenge zu empfangen, und
- eine Bestrahlungsvorrichtung (4), die konfiguriert ist, um Desinfektionsstrahlungen in die Bestrahlungskammer (2) zu emittieren, um die Flüssigkeit in der Bestrahlungskammer (2) zu desinfizieren,
wobei die Bestrahlungskammer (2) umfasst:
- einen Flüssigkeitseinlass (10), der sich in einem untersten Bereich (2.1) der Bestrahlungskammer (2) zum Einführen der Flüssigkeit in die Bestrahlungskammer (2) befindet,
- einen Flüssigkeitsauslass (12), der sich in einem obersten Bereich (2.2) der Bestrahlungskammer (2) befindet, zum Ablassen der eingeführten Flüssigkeit aus der Bestrahlungskammer (2), wobei die Desinfektionseinheit (1) **gekennzeichnet ist durch**
- einen Lufteinlass (14), der sich in dem obersten Bereich (2.2) der Bestrahlungskammer (2) befindet, um Luft in die Bestrahlungskammer (2) eintreten zu lassen und die Flüssigkeit über den Flüssigkeitseinlass (10) aus der Bestrahlungskammer (2) abzuführen und/oder die eingetretene Luft über den Flüssigkeitsauslass (12) zu befördern.

2. Desinfektionseinheit (1) nach Anspruch 1, wobei sich der Lufteinlass (14) nahe oder an dem höchsten Niveau der Bestrahlungskammer (2) befindet und/oder wobei sich der Flüssigkeitsauslass (12) nahe oder an dem höchstens Niveau der Bestrahlungskammer (2) befindet, und/oder wobei sich der Flüssigkeitseinlass (10) nahe oder an dem untersten Niveau der Bestrahlungskammer (2) befindet.

3. Desinfektionseinheit (1) nach einem der vorstehenden Ansprüche, wobei die Bestrahlungsvorrichtung (4) in Bezug auf die Bestrahlungskammer (2) positioniert ist, um von dem Lufteinlass (14) beabstandet zu sein, vorzugsweise gegenüber dem Lufteinlass (14) und/oder gegenüber dem Flüssigkeitsauslass (12) und/oder gegenüber dem obersten Bereich (2.2), wobei sich die Bestrahlungsvorrichtung (4) vorzugsweise in dem untersten Bereich (2.1) und/oder neben dem Flüssigkeitseinlass (10) befindet.

4. Desinfektionseinheit (1) nach einem der vorstehenden Ansprüche, wobei die Bestrahlungsvorrichtung (4) eine UV-Lichtquelle, vorzugsweise mindestens eine UV-LED, mehr bevorzugt mehrere UV-LEDs (6) umfasst, die zum Beispiel als ein Array von UV-LEDs eingerichtet sind.

5. Desinfektionseinheit (1) nach einem der vorstehenden Ansprüche, ferner umfassend ein Luftsperrventil (20), das vorzugsweise in eine Wand eingepasst ist, die die Bestrahlungskammer (2) definiert, wobei das Luftsperrventil (20) vorzugsweise nahe dem Lufteinlass (14) derart eingerichtet ist, dass die meisten oder alle benetzbaren Oberflächen des Luftsperrventils (20) den Strahlungen der Bestrahlungsvorrichtung (40) teilweise oder vollständig ausgesetzt sind.

6. Getränkezubereitungsmaschine (101), umfassend:
- eine Desinfektionseinheit (1) nach einem der vorstehenden Ansprüche,
- eine Getränkezubereitungseinheit (102), die mit dem Flüssigkeitsauslass (12) fluidisch verbunden ist,
- eine Flüssigkeitszufuhreinheit (103), die mit dem Flüssigkeitseinlass (10) fluidisch verbunden und konfiguriert ist, um über den Flüssigkeitseinlass (10), die Bestrahlungskammer (2) und den Flüssigkeitsauslass (12) eine Flüssigkeit der Getränkezubereitungseinheit (102) zuzuführen, und
- eine Luftzufuhr (108), die mit dem Lufteinlass (14) fluidisch verbunden ist, um Luft über den Lufteinlass (14) in die Bestrahlungskammer (2) eintreten zu lassen und die eingeführte Flüssigkeit über den Flüssigkeitseinlass (10) aus der Bestrahlungskammer (2) abzuführen und/oder die zugeführte Flüssigkeit über den Flüssigkeitsauslass (12) aus der Getränkezubereitungseinheit (102) abzuführen.

7. Getränkezubereitungsmaschine (101) nach Anspruch 6, ferner umfassend ein erstes Ventil (124), das in einer Fluidzufuhrleitung eingerichtet ist, die die Flüssigkeitszufuhreinheit (103) mit dem Flüssigkeitseinlass (10) fluidisch verbindet, wobei das erste Ventil (124) betätigbar ist mindestens zwischen: i) einer ersten Position, um einen Flüssigkeitsfluss zwischen der Flüssigkeitszufuhreinheit (103) und dem Flüssigkeitseinlass (10) zu ermöglichen, und ii) einer zweiten Position, um einen Flüssigkeitsfluss über den Flüssigkeitseinlass (10) aus der Bestrahlungskammer (2) zu einer Abflusseinheit (126), einem Abflussbehälter und/oder einem Flüssigkeitsbehälter (104) der Flüssigkeitszufuhreinheit (103) zu ermöglichen.

8. Getränkezubereitungsmaschine (101) nach einem der Ansprüche 6 bis 7, ferner umfassend ein zweites Ventil (140), vorzugsweise ein Rückschlagventil, das in einer Ablassleitung (122) eingerichtet ist, die den Flüssigkeitsauslass (12) mit der Getränkezubereitungseinheit (102) fluidisch verbindet, wobei das zweite Ventil (140) konfiguriert ist, um zu öffnen i) nur in einer Richtung von dem Flüssigkeitsauslass (12) zu der Getränkezubereitungseinheit (102), um zu verhindern, dass Flüssigkeit zurück zu dem Flüssigkeitsauslass (12) strömt, und ii) nur dann, wenn die Druckdifferenz über das zweite Ventil (140) einen vorbestimmten Schwellenwert überschreitet.

9. Getränkezubereitungsmaschine (101) nach einem der Ansprüche 6 bis 8, wobei sich die Desinfektionseinheit (1) über mindestens einer der Getränkezubereitungseinheit (102), der Flüssigkeitszufuhreinheit (103) und vorzugsweise der Abflusseinheit (126) befindet, wobei sich die Desinfektionseinheit (1) vorzugsweise in einer obersten Position der Getränkezubereitungsmaschine (101) befindet.

10. Getränkezubereitungsmaschine (101) nach einem der Ansprüche 6 bis 9, ferner umfassend eine Heizvorrichtung (136), die eingerichtet ist, um Wärme auf mindestens einen Abschnitt einer Ablassleitung (122) zu übertragen, die den Flüssigkeitsauslass (12) und die Getränkezubereitungseinheit (102) fluidisch verbindet, wobei die Ablassleitung (122) vorzugsweise aus einem wärmeleitenden Material hergestellt ist.

11. Getränkezubereitungsmaschine (101) nach einem der Ansprüche 6 bis 10, ferner umfassend eine Maschinensteuereinheit, die zum Steuern mindestens eines konfiguriert ist von: der Flüssigkeitszufuhreinheit (103), der Luftzufuhr (108), der Getränkezubereitungseinheit (102), der Desinfektionseinheit (1) und vorzugsweise dem ersten Ventil (124), dem zweiten Ventil (140) und der Heizvorrichtung (136).

12. Getränkezubereitungsmaschine (101) nach einem der Ansprüche 6 bis 11, ferner umfassend einen Durchflussmesser (134), der konfiguriert ist, um Signale zu übertragen, die die Flüssigkeitsdurchflussrate in der Flüssigkeitszufuhreinheit (103) darstellen,
wobei vorzugsweise die Maschinensteuereinheit (132) an den Durchflussmesser (134) gebunden ist, um die Signale zu empfangen, wobei vorzugsweise die Maschinensteuereinheit (132) ferner konfiguriert ist, um die Flüssigkeitsdurchflussrate unter einer maximal zulässigen Durchflussrate zu regulieren, die vorbestimmt ist, um eine geeignete Verweilzeit von Flüssigkeit in die Bestrahlungskammer (2) zu erhalten.

13. Getränkezubereitungsverfahren zum Zubereiten eines Getränks durch Abgeben einer Flüssigkeit an eine Getränkezubereitungseinheit (102), das Getränkezubereitungsverfahren umfassend:
- Implementieren einer Getränkezubereitungsmaschine (101) nach einem der Ansprüche 6 bis 12;
- Aktivieren einer Flüssigkeitszufuhreinheit (103), um eine Flüssigkeit über den Flüssigkeitseinlass (10) an die Bestrahlungskammer (2) und ferner über den Flüssigkeitsauslass (12) an die Getränkezubereitungseinheit (102) abzugeben, wobei die Bestrahlungsvorrichtung (4) mindestens während der Abgabe von Flüssigkeit aktiviert wird, um die abgegebene Flüssigkeit zu desinfizieren; und
- Zubereiten eines Getränks mit der desinfizierten Flüssigkeit mit der Getränkezubereitungseinheit (102).

14. Getränkezubereitungsverfahren nach Anspruch 13, ferner umfassend:
- nach Deaktivierung der Flüssigkeitszufuhreinheit (103), Aktivieren der Luftzufuhr (108), um Luft über den Lufteinlass (14) in die Bestrahlungskammer (2) eintreten zu lassen und ferner über den Flüssigkeitsauslass (12) in die Getränkezubereitungseinheit (102) einzutreten, vorzugsweise über die Ablassleitung (122), falls vorhanden, zum Spülen und Entleeren der Getränkezubereitungseinheit (102); und
- nach dem Deaktivieren der Flüssigkeitszufuhreinheit und vorzugsweise nach dem Spülen und Entleeren, Aktivieren oder Aufrechterhalten der Luftzufuhr (108), um Luft über den Lufteinlass (14) in die Bestrahlungskammer (2) eintreten zu lassen, vorzugsweise Platzieren des ersten Ventils (124) in einer Position, um die Zufuhrleitung, die mit der Flüssigkeitszufuhreinheit (103) fluidisch verbunden ist, zu öffnen und, durch die eingetretene Luft, die Flüssigkeit über den Flüssigkeitseinlass (10) aus der Bestrahlungskammer (2) und vorzugsweise in Richtung der Abflusseinheit (126) oder des Flüssigkeitstanks (104) abzuführen.

15. Getränkezubereitungsverfahren nach einem der Ansprüche 13 bis 14, ferner umfassend:
- während eines Füllzeitraums, um die Bestrahlungskammer (2) zu füllen, Aktivieren der Flüssigkeitszufuhreinheit (103), um die Flüssigkeit mit einer ersten Durchflussrate abzugeben; und,
- sobald die Bestrahlungskammer (2) mit Flüssigkeit gefüllt ist, Abgeben der Flüssigkeit mit einer zweiten Durchflussrate, die höher als die erste Durchflussrate ist, zum Ausgeben eines Getränks.

16. Getränkezubereitungsverfahren nach einem der Ansprüche 13 bis 15, ferner umfassend:
- Aktivieren der Heizvorrichtung (136), um i) die Ablassleitung (122) und vorzugsweise ii) die Luft, die in der Ablassleitung (122) enthalten ist, zu erhitzen; und/oder
- Aktivieren oder Aufrechterhalten der Luftzufuhr (108), um heiße Luft über den Lufteinlass (14) in die Bestrahlungskammer (2) eintreten zu lassen, wobei die Luftzufuhr (108) konfiguriert ist, um heiße Luft zuzuführen.

## Revendications

1. Unité de désinfection (1), destinée à la désinfection d'un liquide à distribuer à une unité de préparation de boisson (102) afin de préparer une boisson, l'unité de désinfection (1) comprenant :
- une chambre d'irradiation (2) conçue pour recevoir une quantité de liquide, et
- un dispositif d'irradiation (4) configuré pour émettre des rayonnements de désinfection dans la chambre d'irradiation (2) de manière à désinfecter le liquide dans la chambre d'irradiation (2),
dans laquelle la chambre d'irradiation (2) comprend :
- une entrée de liquide (10) située dans une région la plus basse (2.1) de la chambre d'irradiation (2) pour introduire le liquide dans la chambre d'irradiation (2),
- une sortie de liquide (12) située dans une région la plus haute (2.2) de la chambre d'irradiation (2) pour faire sortir le liquide introduit hors de la chambre d'irradiation (2), l'unité de désinfection (1) étant **caractérisée par**
- une entrée d'air (14) située dans la région la plus haute (2.2) de la chambre d'irradiation (2) de manière à laisser l'air entrer dans la chambre d'irradiation (2) et à évacuer le liquide hors de la chambre d'irradiation (2) par l'intermédiaire de l'entrée de liquide (10) et/ou à acheminer l'air entré par l'intermédiaire de la sortie de liquide (12).

2. Unité de désinfection (1) selon la revendication 1, dans laquelle l'entrée d'air (14) est située près du niveau le plus élevé de la chambre d'irradiation (2) ou à ce niveau, et/ou dans laquelle la sortie de liquide (12) est située près du niveau le plus élevé de la chambre d'irradiation (2) ou à ce niveau, et/ou dans laquelle l'entrée de liquide (10) est située près du niveau le plus bas de la chambre d'irradiation (2) ou à ce niveau.

3. Unité de désinfection (1) selon l'une quelconque des revendications précédentes, dans laquelle le dispositif d'irradiation (4) est positionné par rapport à la chambre d'irradiation (2) de manière à être distant de l'entrée d'air (14), de préférence en regard de l'entrée d'air (14) et/ou en regard de la sortie de liquide (12) et/ou en regard de la région la plus haute (2.2), le dispositif d'irradiation (4) étant de préférence situé dans la région la plus basse (2.1) et/ou à côté de l'entrée de liquide (10).

4. Unité de désinfection (1) selon l'une quelconque des revendications précédentes, dans laquelle le dispositif d'irradiation (4) comprend une source de lumière UV, de préférence au moins une DEL UV, plus préférablement plusieurs DEL UV (6) agencées par exemple sous la forme d'un réseau de DEL UV.

5. Unité de désinfection (1) selon l'une quelconque des revendications précédentes, comprenant en outre un clapet anti-retour d'air (20), lequel est de préférence installé dans une paroi délimitant la chambre d'irradiation (2), le clapet anti-retour d'air (20) étant de préférence agencé près de l'entrée d'air (14) de telle sorte que la plupart ou la totalité des surfaces mouillables du clapet anti-retour d'air (20) soient partiellement ou totalement exposées aux rayonnements du dispositif d'irradiation (40).

6. Machine de préparation de boisson (101) comprenant :
- une unité de désinfection (1) selon l'une quelconque des revendications précédentes,
- une unité de préparation de boisson (102) raccordée fluidiquement avec la sortie de liquide (12),
- une unité d'alimentation en liquide (103) raccordée fluidiquement avec l'entrée de liquide (10) et configurée pour alimenter l'unité de préparation de boisson (102) avec un liquide par l'intermédiaire de l'entrée de liquide (10), la chambre d'irradiation (2) et la sortie de liquide (12), et
- une alimentation en air (108) raccordée fluidiquement avec l'entrée d'air (14) de manière à laisser l'air entrer dans la chambre d'irradiation (2) par l'intermédiaire de l'entrée d'air (14) et à évacuer le liquide introduit hors de la chambre d'irradiation (2) par l'intermédiaire de l'entrée de liquide (10) et/ou à évacuer le liquide fourni hors de l'unité de préparation de boisson (102) par l'intermédiaire de la sortie de liquide (12).

7. Machine de préparation de boisson (101) selon la revendication 6, comprenant en outre un premier clapet (124) agencé dans une conduite d'alimentation en fluide raccordant fluidiquement l'unité d'alimentation en liquide (103) à l'entrée de liquide (10), le premier clapet (124) pouvant être actionné au moins entre : i) une première position pour permettre un écoulement de liquide entre l'unité d'alimentation en liquide (103) et l'entrée de liquide (10) et ii) une seconde position pour permettre un écoulement de liquide hors de la chambre d'irradiation (2) par l'intermédiaire de l'entrée de liquide (10) vers une unité de drainage (126), un réservoir de drainage et/ou un réservoir de liquide (104) de l'unité d'alimentation en liquide (103).

8. Machine de préparation de boisson (101) selon l'une quelconque des revendications 6 à 7, comprenant en outre un second clapet (140), de préférence un clapet de retenue, agencé dans une conduite d'évacuation (122) raccordant fluidiquement la sortie de liquide (12) à l'unité de préparation de boisson (102), le second clapet (140) étant conçu pour ne s'ouvrir que i) dans un sens, depuis la sortie de liquide (12) vers l'unité de préparation de boisson (102) de manière à empêcher le liquide de refluer vers la sortie de liquide (12) et ii) lorsque la différence de pression à travers la seconde soupape (140) dépasse une valeur seuil prédéfinie.

9. Machine de préparation de boisson (101) selon l'une quelconque des revendications 6 à 8, dans laquelle l'unité de désinfection (1) est située au-dessus d'au moins une unité parmi l'unité de préparation de boisson (102), l'unité d'alimentation en liquide (103) et, de préférence, l'unité de drainage (126), l'unité de désinfection (1) étant de préférence située dans une position la plus haute de la machine de préparation de boisson (101).

10. Machine de préparation de boisson (101) selon l'une quelconque des revendications 6 à 9, comprenant en outre un dispositif de chauffage (136) agencé de manière à transférer de la chaleur à au moins une partie d'une conduite d'évacuation (122) raccordant fluidiquement la sortie de liquide (12) à l'unité de préparation de boisson (102), la conduite d'évacuation (122) étant de préférence constituée d'un matériau thermoconducteur.

11. Machine de préparation de boisson (101) selon l'une quelconque des revendications 6 à 10, comprenant en outre une unité de commande de machine configurée pour commander au moins une parmi : l'unité d'alimentation en liquide (103), l'alimentation en air (108), l'unité de préparation de boisson (102), l'unité de désinfection (1) et, de préférence, le premier clapet (124), le second clapet (140) et le dispositif de chauffage (136).

12. Machine de préparation de boisson (101) selon l'une quelconque des revendications 6 à 11, comprenant en outre un débitmètre (134) configuré pour transmettre des signaux représentant le débit de liquide dans l'unité d'alimentation en liquide (103),
dans laquelle de préférence l'unité de commande de machine (132) est connectée au débitmètre (134) de manière à recevoir lesdits signaux, dans laquelle de préférence l'unité de commande de machine (132) est en outre configurée pour réguler le débit de liquide en dessous d'un débit admissible maximum qui est prédéfini de manière à obtenir un temps de séjour approprié du liquide dans la chambre d'irradiation (2).

13. Procédé de préparation de boisson, servant à la préparation d'une boisson par distribution d'un liquide à une unité de préparation de boisson (102), le procédé de préparation de boisson comprenant :
- la mise en oeuvre d'une machine de préparation de boisson (101) selon l'une quelconque des revendications 6 à 12 ;
- l'activation d'une unité d'alimentation en liquide (103) pour distribuer un liquide par l'intermédiaire de l'entrée de liquide (10) à la chambre d'irradiation (2) et en outre par l'intermédiaire de la sortie de liquide (12) vers l'unité de préparation de boisson (102), dans laquelle le dispositif d'irradiation (4) est activé au moins pendant la distribution de liquide pour désinfecter le liquide distribué ; et
- la préparation d'une boisson avec le liquide désinfecté à l'aide de l'unité de préparation de boisson (102).

14. Procédé de préparation de boisson selon la revendication 13, comprenant en outre :
- après la désactivation de l'unité d'alimentation en liquide (103), l'activation de l'alimentation en air (108) de manière à laisser l'air entrer dans la chambre d'irradiation (2) par l'intermédiaire de l'entrée d'air (14) et en outre entrer dans l'unité de préparation de boisson (102) par l'intermédiaire de la sortie de liquide (12), de préférence par l'intermédiaire de la conduite d'évacuation (122) lorsqu'elle est présente, pour purger et vider l'unité de préparation de boisson (102) ; et
- après la désactivation de l'unité d'alimentation en liquide et de préférence après ladite purge et ledit vidage, l'activation ou le maintien de l'alimentation en air (108) de manière à laisser l'air entrer dans la chambre d'irradiation (2) par l'intermédiaire de l'entrée d'air (14), de préférence le placement du premier clapet (124) dans une position pour ouvrir la conduite d'alimentation raccordée fluidiquement avec l'unité d'alimentation en liquide (103) et l'évacuation, par l'air entré, du liquide hors de la chambre d'irradiation (2) par l'intermédiaire de l'entrée de liquide (10) et de préférence vers l'unité de drainage (126) ou le réservoir de liquide (104).

15. Procédé de préparation de boisson selon l'une quelconque des revendications 13 à 14, comprenant en outre :
- pendant une période de remplissage pour remplir la chambre d'irradiation (2), l'activation de l'unité d'alimentation en liquide (103) de manière à distribuer le liquide à un premier débit ; et,
- une fois que la chambre d'irradiation (2) est remplie de liquide, la distribution du liquide à un second débit supérieur au premier débit pour distribuer une boisson.

16. Procédé de préparation de boisson selon l'une quelconque des revendications 13 à 15, comprenant en outre :
- l'activation du dispositif de chauffage (136) de manière à chauffer i) la conduite d'évacuation (122) et de préférence ii) l'air contenu dans la conduite d'évacuation (122) ; et/ou
- l'activation ou le maintien de l'alimentation en air (108) de manière à laisser l'air chaud entrer dans la chambre d'irradiation (2) par l'intermédiaire de l'entrée d'air (14) où l'alimentation en air (108) est conçue pour fournir de l'air chaud.
